(19) Europäisches Patentamt
European Patent Office
Office européen des brevets

(11) EP 4 316 722 A2

(12) EUROPEAN PATENT APPLICATION

(43) Date of publication:
**07.02.2024 Bulletin 2024/06**

(21) Application number: **23215634.9**

(22) Date of filing: **23.04.2020**

(51) International Patent Classification (IPC):
***B23K 20/12*** *(2006.01)*

(52) Cooperative Patent Classification (CPC):
**B23K 20/1245; B23K 20/123; B23K 20/125; B23K 20/1255;** B23K 2103/18

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.04.2019 JP 2019083178**

(62) Document number(s) of the earlier application(s) in accordance with Art. 76 EPC:
**20795877.8 / 3 960 357**

(71) Applicant: **KAWASAKI JUKOGYO KABUSHIKI KAISHA**
**Kobe-shi, Hyogo 650-8670 (JP)**

(72) Inventors:
- **OHASHI, Ryoji**
  **Kobe-shi, 650-8670 (JP)**
- **MURAMATSU, Yoshitaka**
  **Kobe-shi, 650-8670 (JP)**
- **TAKEOKA, Naoki**
  **Kobe-shi, 650-8670 (JP)**
- **MIYAKE, Masahiro**
  **Kobe-shi, 650-8670 (JP)**

(74) Representative: **Müller-Boré & Partner Patentanwälte PartG mbB**
**Friedenheimer Brücke 21**
**80639 München (DE)**

Remarks:
This application was filed on 11-12-2023 as a divisional application to the application mentioned under INID code 62.

# (54) FRICTION STIR SPOT WELDING DEVICE AND METHOD FOR OPERATING SAME

(57) A friction stir welding apparatus according to the present disclosure includes a pin member (11), a shoulder member (12), a rotary actuator (57), a tool actuator (53), and a controller (51) configured to operate the tool actuator (53) and the rotary actuator (57) so that a tip end of the rotating shoulder member (12) reaches a given first position in a second member (62) set in advance, and the rotating pin member (11) retreats from a joining part of a to-be-joined object (60).

50
UP
53
531
532
522
52
521
41
13
55
57
P1
12
11
P2
60
Xr
P3
Rp
Rs
62a
61
t
62
56
56a
12a
11a
13a
DOWN
FIG. 1

## Description

TECHNICAL FIELD

The present disclosure relates to a friction stir welding apparatus and a method of operating the apparatus.

BACKGROUND ART

Methods of joining members made of different types of metallic materials are known, in which a first member made of softer metallic material and a second member made of harder metallic material are overlapped with each other and a tip end of a probe is inserted from the first member side to reach directly above the second member while being rotated so that the first and second members are friction-stirred to be joined together (e.g., Patent Document 1).

In the method of joining the different types of metallic materials disclosed in Patent Document 1, a double-acting rotary tool is used as a rotary tool in which the probe is provided separately from a shoulder member so as to be movable independently in an axial direction. The probe is inserted into the first member to perform friction stir welding of the first and second members.

[Reference Document of Conventional Art]

[Patent Document]

[Patent Document 1] JP4937386B2

DESCRIPTION OF THE DISCLOSURE

[Problem to be Solved by the Disclosure]

However, the method of joining different types of metallic materials disclosed in Patent Document 1 still has room for an improvement in terms of shortening a time for the joining.

One purpose of the present disclosure is to provide a friction stir welding apparatus and a method of operating the apparatus, capable of shortening a time for joining, compared to the method of joining different types of metallic materials disclosed in Patent Document 1.

[Summary of the Disclosure]

In order to solve the problem, a friction stir welding apparatus according to the present disclosure joins a to-be-joined object having a first member and a second member by softening the to-be-joined object by frictional heat. The friction stir welding apparatus includes a pin member formed in a solid cylindrical shape, a shoulder member formed in a hollow cylindrical shape and into which the pin member is inserted, a rotary actuator configured to rotate the pin member and the shoulder member about an axis aligned with an axial center of the pin member, an advance/retreat actuator (also referred to as a tool actuator) configured to advance and retreat each of the pin member and the shoulder member along the axis, and a controller. The first member is disposed to be opposed to the tool, and is made of material with a lower melting point than the second member. The controller is adapted to (A) operate the rotary actuator and the advance/retreat actuator (the tool actuator) so that the pin member and the shoulder member press a joining part of the to-be-joined object while rotating the pin member and the shoulder member, (B) operate the advance/retreat actuator (the tool actuator) and the rotary actuator so that a tip end of the rotating shoulder member reaches a given first position in the second member set in advance, and the rotating pin member retreats from the joining part of the to-be-joined object, and (C) then operate the rotary actuator and the advance/retreat actuator (the tool actuator) so that the rotating shoulder member is pulled out from the joining part of the to-be-joined object, and the rotating pin member is advanced toward the joining part of the to-be-joined object.

According to this, when rotational speeds of the pin member and the shoulder member are the same, a peripheral speed is higher when the shoulder member is press-fitted into the joining part, compared to when the pin member is press-fitted into the joining part.

Therefore, a force to generate plastic flow inside the joining part increases when the shoulder member is press-fitted, compared to when the pin member is press-fitted, and thus, a decrease in a speed of press-fitting into the joining part can be suppressed. Therefore, a time for joining can be shortened compared to the method of joining different types of metallic materials disclosed in Patent Document 1.

Moreover, a method of operating a friction stir welding apparatus according to the present disclosure is a method of joining a to-be-joined object having a first member and a second member by softening the to-be-joined object by frictional heat. The friction stir welding apparatus includes a pin member formed in a solid cylindrical shape, a shoulder member formed in a hollow cylindrical shape and into which the pin member is inserted, a rotary actuator configured to rotate the pin member and the shoulder member about an axis aligned with an axial center of the pin member, an advance/retreat actuator (a tool actuator) configured to advance and retreat each of the pin member and the shoulder member along the axis, and a controller. The first member is disposed to be opposed to the tool, and is made of material with a lower melting point than the second member. The controller is adapted to (A) operate the rotary actuator and the advance/retreat actuator (the tool actuator) so that the pin member and the shoulder member press a joining part of the to-be-joined object while rotating the pin member and the shoulder member, (B) operate the advance/retreat actuator (the tool actuator) and the rotary actuator so that a tip end of the rotating shoulder member reaches a given first position in the second member set in advance, and the rotating pin member retreats from the joining part of the to-be-joined object, and (C) then operate the rotary actuator and the advance/retreat actuator (the tool actuator) so that the rotating shoulder member is pulled out from the joining part of the to-be-joined object, and the rotating pin member is advanced toward the joining part of the to-be-joined object.

According to this, when rotational speeds of the pin member and the shoulder member are the same, a peripheral speed is higher when the shoulder member is press-fitted into the joining part, compared to when the pin member is press-fitted into the joining part.

Therefore, a force to generate plastic flow inside the joining part increases when the shoulder member is press-fitted, compared to when the pin member is press-fitted, and thus, a decrease in a speed of press-fitting into the joining part can be suppressed. Therefore, a time for joining can be shortened compared to the method of joining different types of metallic materials disclosed in Patent Document 1.

The above purpose, other purposes, features, and advantages of the present disclosure will be made clear from the following detailed description of suitable embodiments with reference to the accompanying drawings.

[Effect of the Disclosure]

According to a friction stir welding apparatus and a method of operating the apparatus according to the present disclosure, a time for joining can be shortened compared to the conventional method of joining different types of metallic material.

BRIEF DESCRIPTION OF DRAWINGS

Fig. 1 is a schematic view illustrating an outline configuration of a friction stir welding apparatus according to Embodiment 1.

Fig. 2 is a block diagram schematically illustrating a control configuration of the friction stir welding apparatus illustrated in Fig. 1.

Fig. 3 is a flowchart illustrating one example of operation of the friction stir welding apparatus according to Embodiment 1.

Fig. 4A is a process chart schematically illustrating one example of each process of friction stir welding performed by the friction stir welding apparatus illustrated in Fig. 1.

Fig. 4B is a process chart schematically illustrating one example of each process of the friction stir welding performed by the friction stir welding apparatus illustrated in Fig. 1.

Fig. 5 is a graph illustrating a result of a tensile-shear test and a cross-tension test performed to to-be-joined objects which are friction-stir-welded by friction stir welding apparatuses of Comparative Example 1 and Test Example 1 under a joining condition 1.

Fig. 6 shows cross-sectional images of the to-be-joined object which is friction-stir-welded by the friction stir welding apparatus of Comparative Example 1 under the joining condition 1, and to-be-joined objects which are friction-stir-welded by the friction stir welding apparatus of Test Example 1 under a joining condition 2.

Fig. 7 is a graph illustrating a result of the tensile-shear test performed to to-be-joined objects which are friction-stir-welded by a friction stir welding apparatus of Test Example 2 under joining conditions 3 to 7.

Fig. 8 shows cross-sectional images of the to-be-joined objects which are friction-stir-welded by the friction stir welding apparatus of Test Example 2 under the joining conditions 3 to 7.

Fig. 9A is a graph illustrating a result of the tensile-shear test and the cross-tension test performed to a to-be-joined object which is friction-stir-welded by a friction stir welding apparatus of Test Example 3 under a joining condition 8.

Fig. 9B is a cross-sectional image of the to-be-joined object which is friction-stir-welded by the friction stir welding apparatus of Test Example 3 under the joining condition 8.

Fig. 10 is a cross-sectional image of a to-be-joined object which is friction-stir-welded by a friction stir welding apparatus of Test Example 4 under a joining condition 9.

Fig. 11 shows cross-sectional images of to-bejoined objects which are friction-stir-welded by friction stir welding apparatuses of Comparative Example 2 and Test Example 5 under a joining condition 10.

MODES FOR CARRYING OUT THE DISCLOSURE

Hereinafter, a preferred embodiment of the present disclosure is described with reference to the drawings. Note that, below, the same reference characters are given to the same or corresponding elements throughout the drawings to omit redundant description. Moreover, throughout the drawings, components necessary for describing the present disclosure are extracted to be illustrated, and illustration of other components may be omitted. Moreover, the present disclosure is not limited to the embodiment.

(Embodiment 1)

A friction stir welding apparatus according to Embodiment 1 is a friction stir welding apparatus which joins a to-be-joined object having a first member and a second member by softening the to-be-joined object by frictional heat. The apparatus includes a pin member formed in a solid cylindrical shape, a shoulder member formed in a hollow cylindrical shape and into which the pin member is inserted, a rotary actuator which rotates the pin member and the shoulder member about an axis aligned with an axial center of the pin member, an advance/retreat actuator (the tool actuator) which advances and retreats each of the pin member and the shoulder member along the axis, and a controller. The first member is disposed to be opposed to a tool, and is made of material with a lower melting point than the second member. The controller (A) operates the rotary actuator and the advance/retreat actuator (the tool actuator) so that the pin member and the shoulder member press a joining part of the to-be-joined object while rotating the pin member and the shoulder member, (B) operates the advance/retreat actuator (the tool actuator) and the rotary actuator so that a tip end of the rotating shoulder member reaches a given first position in the second member set in advance, and the rotating pin member retreats from the joining part of the to-be-joined object, and (C) then operates the rotary actuator and the advance/retreat actuator (the tool actuator) so that the rotating shoulder member is pulled out from the joining part of the to-be-joined object, and the rotating pin member is advanced toward the joining part of the to-be-joined object.

Moreover, in the friction stir welding apparatus according to Embodiment 1, the first position may be an arbitrary position in the second member between a contacting surface with the first member, and 0.3mm or smaller from the contacting surface.

Moreover, in the friction stir welding apparatus according to Embodiment 1, the shoulder member may be configured to satisfy "Rs> $2^{1/2}\times$ Rp" when assumed that a radius of a tip-end surface of the shoulder member is Rs, and a radius of a tip-end surface of the pin member is Rp.

Moreover, in the friction stir welding apparatus according to Embodiment 1, the to-be-joined object may be applied with sealant at a contacting part between the first member and the second member overlapped with each other.

Below, one example of the friction stir welding apparatus according to Embodiment 1 is described in detail with reference to the drawings.

[Configuration of Friction Stir Welding Apparatus]

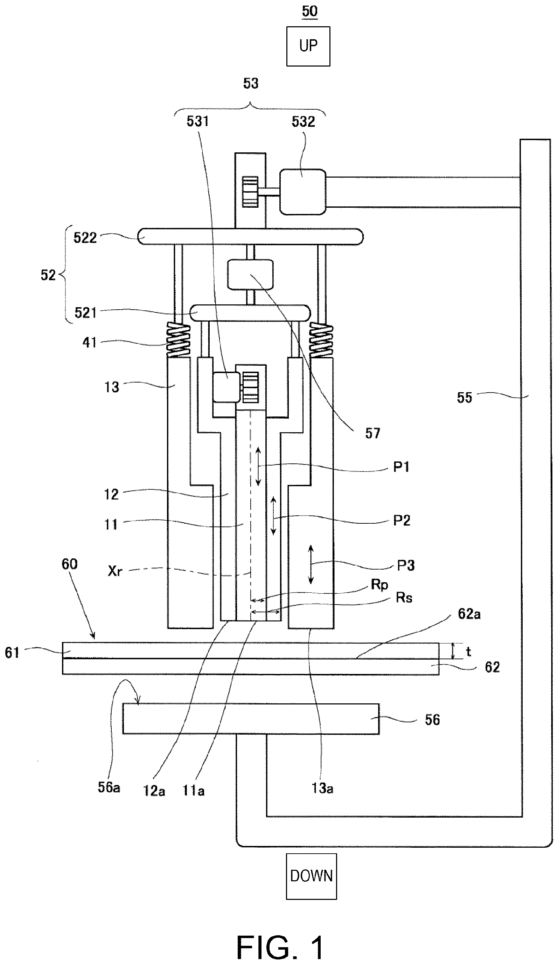

Fig. 1 is a schematic view illustrating an outline configuration of the friction stir welding apparatus according to Embodiment 1. Note that an up-and-down direction in Fig. 1 indicates an up-and-down direction of the friction stir welding apparatus.

As illustrated in Fig. 1, a friction stir welding apparatus 50 according to Embodiment 1 is provided with a pin member 11, a shoulder member 12, a tool brace 52, an advance/retreat actuator (a tool actuator) 53, a clamp member 13, a backing support part 55, a backing member 56, and a rotary actuator 57.

The pin member 11, the shoulder member 12, the tool brace 52, the advance/retreat actuator (the tool actuator) 53, the clamp member 13, and the rotary actuator 57 are provided to an upper end of the backing support part 55 comprised of a C-type gun (C-type frame). Moreover, the backing member 56 is provided to a lower end of the backing support part 55. The pin member 11, the shoulder member 12 and the clamp member 13, and the backing member 56 are attached to the backing support part 55 in the positions such that the pin member 11, the shoulder member 12 and the clamp member 13 are opposed to the backing member 56. Note that a to-be-joined object 60 is disposed between the pin member 11, the shoulder member 12 and the clamp member 13, with the backing member 56.

The pin member 11, the shoulder member 12, and the clamp member 13 are fixed to the tool brace 52 comprised of a rotary tool brace 521 and a clamp brace 522. In detail, the pin member 11 and the shoulder member 12 are fixed to the rotary tool brace 521, and the clamp member 13 is fixed to the clamp brace 522 through a clamp actuator 41. Moreover, the rotary tool brace 521 is supported by the clamp brace 522 through the rotary actuator 57. Note that the clamp actuator 41 is comprised of a spring.

Moreover, the pin member 11, the shoulder member 12, and the clamp member 13 are advanced and retreated in the up-and-down direction by the advance/retreat actuator (the tool actuator) 53 comprised of a pin actuator 531 and a shoulder actuator 532.

The pin member 11 is formed in a solid cylindrical shape, and although not illustrated in detail in Fig. 1, it is supported by the rotary tool brace 521. Moreover, the pin member 11 is rotated by the rotary actuator 57 about an axis Xr (rotary axis), which is aligned with the axial center of the pin member 11, and is advanced and retreated by the pin actuator 531 in a direction indicated by an arrow P1 (i.e., in the direction of the axis Xr (the up-and-down direction in Fig. 1)).

Note that the pin actuator 531 may be comprised of a linear-motion actuator, for example. The linear-motion actuator may be comprised of, for example, a servomotor with a rack-and-pinion, a servomotor with a ball screw, or an air cylinder.

The shoulder member 12 is formed in a hollow cylindrical shape, and supported by the rotary tool brace 521. The pin member 11 is inserted into the hollow of the shoulder member 12. In other words, the shoulder member 12 is disposed to surround an outer circumferential surface of the pin member 11.

Moreover, the shoulder member 12 is rotated by the rotary actuator 57 about the axis Xr common with the pin member 11, and is advanced and retreated by the shoulder actuator 532 in a direction of an arrow P2 (i.e., in the direction of the axis Xr).

Note that the shoulder actuator 532 may be comprised of a linear-motion actuator, for example. The linear-motion actuator may be comprised of, for example, a servomotor and a rack-and-pinion, a servomotor and a ball screw, or an air cylinder.

As described above, in this embodiment, both of the pin member 11 and the shoulder member 12 (rotary tools) are supported by the same rotary tool brace 521, and integrally rotated about the axis Xr by the rotary actuator 57. Moreover, the pin member 11 and the shoulder member 12 are advanced and retreated by the pin actuator 531 and the shoulder actuator 532, respectively, in the direction of the axis Xr.

Note that, in Embodiment 1, the pin member 11 can be advanced and retreated independently as well as accompanying with the advancing and retreating of the shoulder member 12. However, each of the pin member 11 and the shoulder member 12 may be advanced and retreated independently.

Therefore, compared to the method of joining different types of metallic materials disclosed in Patent Document 1, a joined area (an area of a newly-formed surface) can be increased. Thus, a joining strength can be increased compared to the method of joining different types of metallic materials disclosed in Patent Document 1.

Similarly to the shoulder member 12, the clamp member 13 is formed in a hollow cylindrical shape, and its axial center is aligned with the axis Xr. The shoulder member 12 is inserted into the hollow of the clamp member 13.

That is, the hollow cylindrical shoulder member 12 is disposed to surround the outer circumferential surface of the pin member 11, and the hollow cylindrical clamp member 13 is disposed to surround an outer circumferential surface of the shoulder member 12. In other words, the clamp member 13, the shoulder member 12, and the pin member 11 have a coaxial telescopic structure.

Moreover, the clamp member 13 presses the to-be-joined object 60 from one surface (surface). As described above, in Embodiment 1, the clamp member 13 is supported by the clamp brace 522 through the clamp actuator 41. The clamp actuator 41 biases the clamp member 13 to the backing member 56 side. The clamp member 13 (including the clamp actuator 41 and the clamp brace 522) can be advanced and retreated by the shoulder actuator 532 in a direction of an arrow P3 (same as the directions of the arrows P1 and P2).

Note that, although in Embodiment 1 the clamp actuator 41 is comprised of the spring, it is not limited to this. The clamp actuator 41 may have any configuration, as long as it can bias or pressurize the clamp member 13. For example, mechanisms utilizing gas pressure, hydraulic pressure, a servomotor, etc., may be suitably used as the clamp actuator 41.

The pin member 11, the shoulder member 12, and the clamp member 13 have a tip-end surface 11a, a tip-end surface 12a, and a tip-end surface 13a, respectively. Moreover, the pin member 11, the shoulder member 12, and the clamp member 13 are advanced and retreated by the advance/retreat actuator (the tool actuator) 53 so that the tip-end surface 11a, the tip-end surface 12a, and the tip-end surface 13a contact the surface of the to-be-joined object 60 (a joining part of the to-be-joined object 60) to press the to-be-joined object 60.

Moreover, when assuming that a radius of the tip-end surface 12a of the shoulder member 12 is Rs, and a radius of the tip-end surface 11a of the pin member 11 is Rp, the shoulder member 12 is configured to satisfy "$Rs > 2^{1/2} \times Rp$." In other words, the shoulder member 12 is configured such that an area of the ring-shaped tip-end surface 12a is larger than an area of the circular tip-end surface 11a.

Therefore, compared to the method of joining different types of metallic materials disclosed in Patent Document 1, the joined area (the area of the newly-formed surface) can be increased. Thus, the joining strength can be increased compared to the method of joining different types of metallic materials disclosed in Patent Document 1.

In Embodiment 1, the backing member 56 contacts and supports, by a flat surface (a support surface 56a), a flat plate-like back surface of the to-be-joined object 60. The configuration of the backing member 56 is not particularly limited, as long as it can appropriately support the to-be-joined object 60 to perform the friction stir welding. The backing member 56 may be configured so that, for example, a plurality of backing members 56 having various shapes are separately prepared, and the backing member 56 may be removed from the backing support part 55 to be changed according to the type of the to-be-joined object 60.

The to-be-joined object 60 includes two of a first member 61 and a second member 62 each in a plate-like shape. The first member 61 is disposed to be opposed to the pin member 11 and the shoulder member 12, and is made of material with a lower melting point than that of the second member 62.

Note that the to-be-joined object 60 may be applied with sealant at a contacting part between the first member 61 and the second member 62 overlapped with each other. The sealant may be a sealing member or an adhesive. As the sealant, for example, polysulfide synthetic rubber, natural rubber, silicone rubber, synthetic rubber such as fluororubber, or synthetic resin such as polytetrafluoroethylene rubber resin, may be used.

As the first member 61, at least one of metallic materials (e.g., aluminum, aluminum alloy, and magnesium alloy), thermoplastics (e.g., polyamide), and fiber reinforced plastics (e.g., carbon-fiber reinforced plastics) may be used. As the aluminum alloy, various aluminum alloy may be used (e.g., Al-Mg-Si alloy (A6061) or Al-Si-Mg alloy (AC4C)).

Moreover, as the second member 62, metallic material (e.g., steel and titanium) may be used. As the steel, various steel may be used (e.g., mild steel and high-strength steel). Moreover, an oxide film or a plating layer (e.g., zinc plating) may be formed on a surface of the steel. The steel plate formed with the zinc plating may be a hot-dip galvanized steel plate (GI steel plate), an alloyed hot-dip galvanized steel plate (GA steel plate), a Galvalume® steel plate, or an aluminum-silicon coating hot-stamped steel plate. The thickness of the plating layer may be 2μm to 50μm.

Note that although in Embodiment 1 the to-be-joined object 60 is comprised of the first member 61 and the second member 62 both formed in the plate-like shape, it is not limited to this. For example, the shape of the to-be-joined object 60 (the first member 61 and the second member 62) is arbitrary, and may be formed in a rectangular parallel-piped shape, or an arc-like shape. Moreover, the to-be-joined object 60 may include three or more members.

Moreover, in Embodiment 1, concrete configurations of the pin member 11, the shoulder member 12, the tool brace 52, the advance/retreat actuator (the tool actuator) 53, the clamp member 13, the backing support part 55, and the rotary actuator 57 are not limited to those described above, but configurations which are widely known in the art of friction stir welding may suitably be used. For example, the pin actuator 531 and the shoulder actuator 532 may each be comprised of a motor-and-gear mechanism, which is known in the art of the friction stir welding.

Moreover, although in Embodiment 1 the backing support part 55 is comprised of a C-type gun, it is not limited to this. The backing support part 55 may have any configuration, as long as it can support the pin member 11, the shoulder member 12, and the clamp member 13 so that they can advance and retreat, as well as supporting the backing member 56 at the position opposed to the pin member 11, the shoulder member 12, and the clamp member 13.

Moreover, although in Embodiment 1 the clamp member 13 is provided, it is not limited to this, and the clamp member 13 may not be provided. In this case, for example, the clamp member 13 may be detachable from the backing support part 55 as necessary.

Moreover, the friction stir welding apparatus 50 according to Embodiment 1 is provided to a robotic device for friction stir welding (not illustrated). In detail, the backing support part 55 is attached to a tip end of an arm of the robotic device.

Therefore, the backing support part 55 may be considered to be included in the robotic device for friction stir welding. A concrete configuration of the robotic device for friction stir welding (including the backing support part 55 and the arm) is not particularly limited, but a configuration known in the art of friction stir welding (e.g., an articulated robot) may suitably be used.

Note that the friction stir welding apparatus 50 (including the backing support part 55) is not limited to be applied to the robotic device for friction stir welding. For example, it may suitably be applied to known processing equipment (e.g., an NC machine, a large C frame, and an automatic riveter).

Moreover, the friction stir welding apparatus 50 according to Embodiment 1 may be configured so that two of robots are used to bring a part of the friction stir welding apparatus 50 other than the backing member 56, and the backing member 56 to be opposed to each other. Moreover, the friction stir welding apparatus 50 may adopt a mode in which the to-be-joined object 60 is a hand-held type or a mode in which a robot is used as a positioner of the to-be-joined object 60, as long as the friction stir welding apparatus 50 can stably perform the friction stir welding to the to-be-joined object 60.

[Control Configuration of Friction Stir Welding Apparatus]

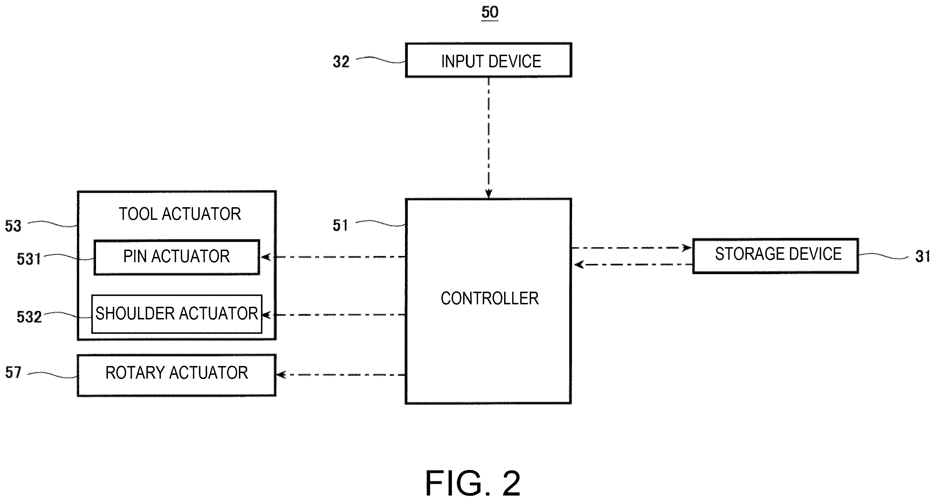

Next, a control configuration of the friction stir welding apparatus 50 according to Embodiment 1 is described in detail with reference to Fig. 2.

Fig. 2 is a block diagram schematically illustrating a control configuration of the friction stir welding apparatus illustrated in Fig. 1.

As illustrated in Fig. 2, the friction stir welding apparatus 50 is provided with a controller 51, a storage device 31, an input device 32, and a position detecting device 33.

The controller 51 controls each member (each device) constituting the friction stir welding apparatus 50. In detail, the controller 51 reads and executes software (e.g., a basic program) stored in the storage device to control the pin actuator 531 and the shoulder actuator 532 constituting the advance/retreat actuator (the tool actuator) 53, and the rotary actuator 57.

Accordingly, switching between the advancing and the retreating of the pin member 11 and the shoulder member 12, and control of a tip-end position, a moving speed, and a moving direction of each of the pin member 11 and the shoulder member 12 during the advancing and retreating, are possible. Moreover, a pressing force to push the to-be-joined object 60 by the pin member 11, the shoulder member 12, and the clamp member 13 can be controlled. Moreover, a rotational speed of the pin member 11 and the shoulder member 12 can be controlled.

Note that the controller 51 may be comprised of a single controller 51 which executes a centralized control, or comprised of a plurality of controllers 51 which collaboratively execute a distributed control. Moreover, the controller 51 may be comprised of a microcomputer, or comprised of an MPU, a PLC (Programmable Logic Controller), or a logic circuit.

The storage device 31 stores the basic program and various data so as to be readable, and it may be comprised of a storage device, such as a known memory or a hard disk. The storage device 31 may not be a single device, and may be comprised of a plurality of storage devices (e.g., a random access memory and a hard disk drive). When the controller 51 etc. is comprised of a microcomputer, at least a part of the storage device 31 may be configured as an internal memory of the microcomputer, or as an independent memory.

Note that, needless to say, the storage device 31 may store data so as to be readable by other than the controller 51, or writable by the controller 51 etc.

The input device 32 allows inputting of various parameters related to the control of the friction stir welding or other data into the controller 51, and is comprised of a known input device (e.g., a keyboard, a touch panel, and a group of button switches). In Embodiment 1, at least a joining condition of the to-be-joined object 60 (e.g., data of the thickness and material of the to-be-joined object 60) is inputtable by the input device 32.

The position detecting device 33 detects positional information of the tip end (the tip-end surface 12a) of the shoulder member 12, and outputs the detected positional information to the controller 51. As the position detecting device 33, for example, a displacement sensor, an LVDT, or an encoder may be used. When the encoder is used as the position detecting device 33, the encoder may detect a rotational angle of the advance/retreat actuator (the tool actuator) 53 (the shoulder actuator 532) which advances and retreats the shoulder member 12. Moreover, the position detecting device 33 may be an ammeter which detects a current value supplied to the advance/retreat actuator (the tool actuator) 53 (the shoulder actuator 532) which advances and retreats the shoulder member 12.

[Operation (Operating Method) of Friction Stir Welding Apparatus]

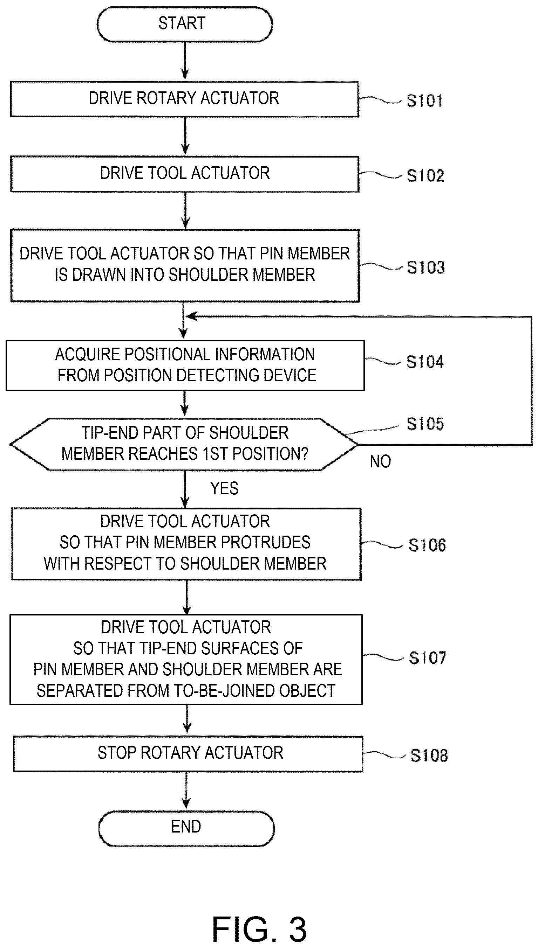

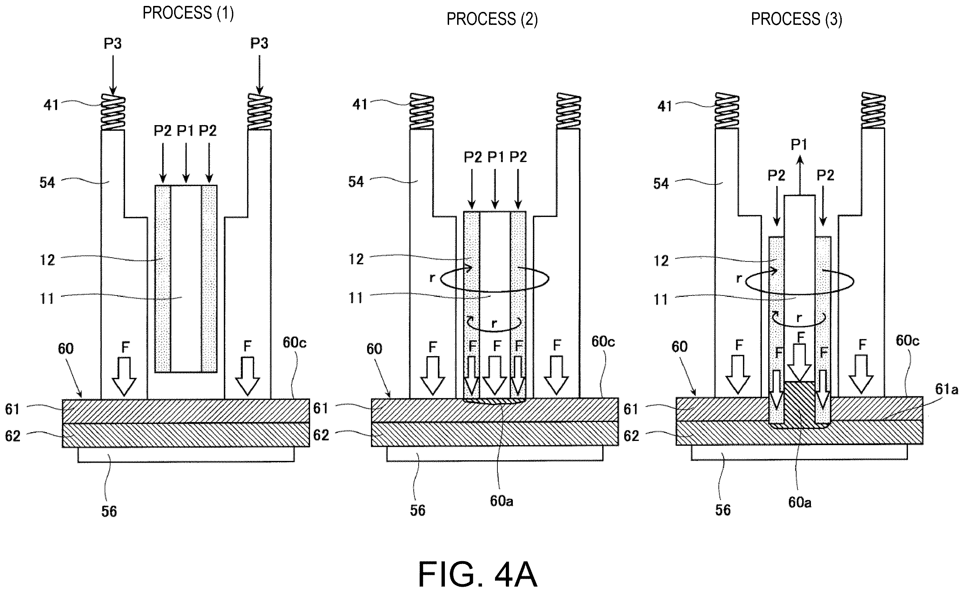

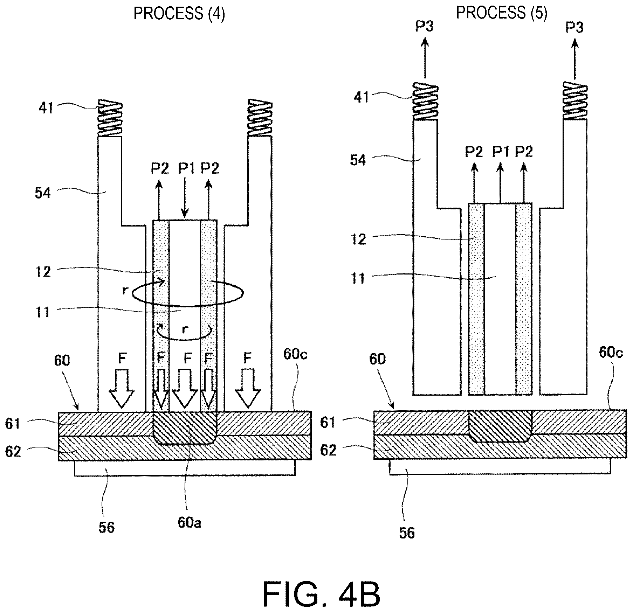

Next, operation of the friction stir welding apparatus 50 according to Embodiment 1 is described in detail with reference to Figs. 3, 4A and 4B. Note that Figs. 4A and 4B illustrate an example in which the first member 61 and the second member 62 are used as the to-be-joined object 60, and they are overlapped with each other to be brought together by spot-welding.

Fig. 3 is a flowchart illustrating one example of operation of the friction stir welding apparatus according to Embodiment 1. Figs. 4A and 4B are process charts schematically illustrating one example of each process of the friction stir welding performed by the friction stir welding apparatus illustrated in Fig. 1.

Note that, in Figs. 4A and 4B, a part of the friction stir welding apparatus is omitted, an arrow "r" indicates a rotational direction of the pin member 11 and the shoulder member 12, and a block arrow "F" indicates a direction in which a force is applied to the first member 61 and the second member 62. Although a force is applied to the first member 61 and the second member 62 also from the backing member 56, it is not illustrated in Figs. 4A and 4B for convenience of description. Moreover, shading is applied to the shoulder member 12 to clearly discriminate the shoulder member 12 from the pin member 11 and the clamp member 13.

First, an operator (manipulator) places the to-be-joined object 60 on the support surface 56a of the backing member 56. Then, the operator operates the input device 32 to input into the controller 51 execution of welding of the to-be-joined object 60. Note that a robot may place the to-be-joined object 60 on the support surface 56a of the backing member 56.

Then, as illustrated in Fig. 3, the controller 51 drives the rotary actuator 57 to rotate the pin member 11 and the shoulder member 12 at a given first speed set in advance (e.g., 200-3,000rpm) (Step S101; see Process (1) in Fig. 4A).

Next, the controller 51 drives the advance/retreat actuator (the tool actuator) 53 (the shoulder actuator 532) to bring the pin member 11, the shoulder member 12, and the clamp member 13 to approach the to-be-joined object 60 while rotating the pin member 11 and the shoulder member 12, and bring the tip-end surface 11a of the pin member 11, the tip-end surface 12a of the shoulder member 12, and the tip-end surface 13a of the clamp member 13 (not illustrated in Figs. 4A and 4B) to contact a surface 60c of the to-be-joined object 60 (the joining part of the to-be-joined object 60) (Step S102; see Process (2) in Fig. 4A).

Here, the controller 51 controls the advance/retreat actuator (the tool actuator) 53 (the shoulder actuator 532) so that the pin member 11, the shoulder member 12, and the clamp member 13 press the to-be-joined object 60 at a given pressing force set in advance (e.g., a given value within a range of3kN-15kN).

Accordingly, the first member 61 and the second member 62 are sandwiched between the clamp member 13 and the backing member 56, and contraction of the clamp actuator 41 biases the clamp member 13 toward the surface 60c of the to-be-joined object 60, thereby a clamping force being generated.

Moreover, in this state, since both of the pin member 11 and the shoulder member 12 do not advance or retreat, they "preheat" the surface 60c of the to-be-joined object 60. Accordingly, the constituent material of the first member 61 at the contacting area produces heat due to friction, thus being softened. Therefore, a plastic flow caused part 60a is generated near the surface 60c of the to-be-joined object 60.

Next, the controller 51 drives the advance/retreat actuator (the tool actuator) 53 so that the tip-end surface 11a of the pin member 11 is drawn into the tip-end surface 12a of the shoulder member 12 (Step S103). Here, the controller 51 may drive the advance/retreat actuator (the tool actuator) 53 (the pin actuator 531) so that the pin member 11 separates from the to-be-joined object 60. Alternatively, the controller 51 may drive the advance/retreat actuator (the tool actuator) 53 (the shoulder actuator 532) so that the shoulder member 12 is press-fitted into the to-be-joined object 60.

Accordingly, the tip-end part of the shoulder member 12 is press-fitted into the joining part of the to-be joined object 60 while being rotated.

Next, the controller 51 acquires from the position detecting device 33 the positional information of the tip end of the shoulder member 12 (Step S104). Next, the controller 51 determines whether the positional information of the tip end of the shoulder member 12 acquired at Step S104 reaches a given first position set in advance (Step S105).

Here, the first position may be set in advance based on an experiment etc., and is an arbitrary position in the second member 62. In detail, the first position is an arbitrary position in the second member 62 between a surface 62a (contacting surface) in contact with the first member 61, and 0.3mm or smaller from the surface 62a.

Alternatively, the first position may be a position distant from the contacting surface 62a by 0.008mm or larger, or 0.01mm or larger, in view of removing the plating layer (plating film) or the oxide film formed in the second member 62 to form a newly-formed surface. Alternatively, the first position may be a position distant from the contacting surface 62a by 0.25mm or smaller, 0.20mm or smaller, or 0.10mm or smaller, in view of preventing wearing (damage) of the shoulder member 12.

Alternatively, the first position may be a position distant from the plating layer (plating film) or the oxide film formed in the second member 62, by 0.20mm or smaller, or 0.10mm or smaller, in view of removing the plating layer (plating film) or the oxide film formed in the second member 62 to form the newly-formed surface.

Accordingly, the tip-end surface 12a of the shoulder member 12 reaches the arbitrary position (i.e., the first position) in the second member 62, 0.3mm or smaller distant from the contacting surface 62a. Then, the newly-formed surface is formed in a part of the second member 62 in contact with the shoulder member 12, and/or in a part of the second member 62 in contact with the plastic flow caused part 60a.

Note that the softened material of the plastic flow caused part 60a is pushed away by the shoulder member 12 and flows from directly below the shoulder member 12 to directly below the pin member 11, and thereby, the pin member 11 is retreated and lifted with respect to the shoulder member 12 (see Process (3) in Fig. 4A).

Moreover, impurities (e.g., zinc or iron oxide) forming the plating layer (plating film) or the oxide film in the surface of the second member 62, also flow to the directly below the pin member 11. Furthermore, a part of the impurities flows outward of an outer circumferential surface of the tip-end part of the shoulder member 12.

If the controller 51 determines that the positional information of the tip end of the shoulder member 12 acquired at Step S104 does not reach the first position (NO at Step S 105), it returns to the processing at Step S 104 to repeat the processing at Steps S104 and S105 until the positional information of the tip end of the shoulder member 12 acquired at Step S104 is determined to reach the first position.

On the other hand, if the controller 51 determines that the positional information of the tip end of the shoulder member 12 acquired at Step S104 reaches the first position (YES at Step S105), it executes processing at Step S106.

Note that, when the position detecting device 33 is comprised of a displacement sensor, the controller 51 may determine whether to have reached the first position based on positional information detected by the displacement sensor.

Moreover, when the position detecting device 33 is comprised of an encoder which detects a rotational angle of the advance/retreat actuator (the tool actuator) 53 (the shoulder actuator 532) which advances and retreats the shoulder member 12, whether to have reached the first position may be determined as follows.

The controller 51 may determine that the tip end of the shoulder member 12 reaches the first position when rotational angle information (speed information) detected by the encoder (the position detecting device 33) becomes smaller than a given first angle set in advance.

Here, the first angle may be set in advance based on an experiment etc. For example, when the material constituting the second member 62 is harder than the material constituting the first member 61, an advancing speed of the shoulder member 12 decreases when the tip end of the shoulder member 12 reaches the surface of the second member 62. Thus, the first angle may be angular information inputted into the advance/retreat actuator (the tool actuator) 53 (the shoulder actuator 532). Alternatively, the first angle may be angular information detected last time (immediately before) by the encoder during the welding.

Moreover, when the position detecting device 33 is comprised of an ammeter which detects a current value supplied to the advance/retreat actuator (the tool actuator) 53 (the shoulder actuator 532) which advances and retreats the shoulder member 12, whether to have reached the first position may be determined as follows.

The controller 51 may determine that the tip end of the shoulder member 12 reaches the first position when current-value information detected by the ammeter (the position detecting device 33) becomes smaller than a given first current value set in advance.

Here, the first current value may be set in advance based on an experiment etc. For example, when the material constituting the second member 62 is harder than the material constituting the first member 61, the advancing speed of the shoulder member 12 decreases when the tip end of the shoulder member 12 reaches the surface of the second member 62. Thus, the first current value may be current-value information inputted into the advance/retreat actuator (the tool actuator) 53 (the shoulder actuator 532). Alternatively, the first current value may be current-value information detected last time (immediately before) by the ammeter during the welding.

At Step S 106, the controller 51 drives the advance/retreat actuator (the tool actuator) 53 (the pin actuator 531) so that the pin member 11 is advanced toward the to-be-joined object 60, and/or drives the advance/retreat actuator (the tool actuator) 53 (the shoulder actuator 532) so that the shoulder member 12 is separated (pulled out) from the to-be-joined object 60.

In detail, the controller 51 controls the advance/retreat actuator (the tool actuator) 53 so that the tip-end surface 11a of the pin member 11 and the tip-end surface 12a of the shoulder member 12 are aligned to have almost no height difference therebetween (brought to be flush with each other).

Accordingly, the pin member 11 gradually advances toward the first member 61, and the shoulder member 12 retreats from the first member 61. At this time, the softened part of the plastic flow caused part 60a flows, from the directly below the pin member 11, to the directly below the shoulder member 12 (a concave part generated by the press-fitting of the shoulder member 12).

Then, the tip-end surface 11a of the pin member 11 and the tip-end surface 12a of the shoulder member 12 move to near the surface 60c of the to-be-joined object 60. Therefore, the surface 60c of the to-be-joined object 60 is shaped, and a substantially flat surface can be obtained, without a substantial concave part being formed therein (see Process (4) in Fig. 4B).

Note that at Step S103 and/or Step S106, when assumed that the area of the tip-end surface of the pin member 11 is "Ap," the area of the tip-end surface of the shoulder member 12 is "As," a depth of press-fitting of the pin member 11 is "Pp," and a depth of the press-fitting of the shoulder member 12 is "Ps," the controller 51 preferably controls the advance/retreat actuator (the tool actuator) 53 to reduce an absolute value of a tool average position Tx, which is defined based on the following equation:

$$Ap \cdot Pp + As \cdot Ps = Tx \qquad \ldots (I)$$

The controller 51 preferably controls the advance/retreat actuator (the tool actuator) 53 so that the tool average position Tx= 0. Note that since a concrete control to reduce the absolute value of the tool average position Tx is disclosed in JP2012-196682A in detail, description thereof is omitted.

Moreover, at Step S106, the controller 51 may control the advance/retreat actuator (the tool actuator) 53 to position the tip-end surface 11a of the pin member 11 at the first position. In this case, the controller 51 may control the advance/retreat actuator (the tool actuator) 53 so that, after the tip-end surface 11a of the pin member 11 is positioned at the first position, the tip-end surface 11a of the pin member 11 and the tip-end surface 12a of the shoulder member 12 are brought to be flush with each other.

Next, the controller 51 drives the advance/retreat actuator (the tool actuator) 53 to separate the pin member 11, the shoulder member 12, and the clamp member 13 from the to-be-joined object 60 (Step S107). Then, the controller 51 controls the rotary actuator 57 to stop the rotation of the pin member 11 and the shoulder member 12 (Step S108; see Process (5) in Fig. 4B), and ends the program (welding of the to-be-joined object 60).

Accordingly, since the first member 61 and the second member 62 are not applied with the rotation (and pressing) which is caused by being contacted with the pin member 11 and the shoulder member 12, the plastic flow stops in the plastic flow caused part 60a, and the plastic flow caused part 60a and the newly-formed surface of the second member 62 are joined together.

In the friction stir welding apparatus 50 according to Embodiment 1 configured as described above, the controller 51 operates the advance/retreat actuator (the tool actuator) 53 and the rotary actuator 57 so that the tip end of the rotating shoulder member 12 reaches the first position, and the rotating pin member 11 retreats from the joining part of the to-be-joined object 60.

According to this, when the rotational speeds of the pin member 11 and the shoulder member 12 are the same, a peripheral speed is higher when the shoulder member 12 is press-fitted into the joining part, compared to when the pin member 11 is press-fitted into the joining part.

Therefore, a force to generate the plastic flow inside the joining part increases when the shoulder member 12 is press-fitted, compared to when the pin member 11 is press-fitted, and thus, a decrease in a speed of press-fitting into the joining part can be suppressed. Therefore, the friction stir welding apparatus 50 according to Embodiment 1 can shorten a time for joining compared to the method of joining different types of metallic materials disclosed in Patent Document 1.

Moreover, in the friction stir welding apparatus 50 according to Embodiment 1, the controller 51 operates the advance/retreat actuator (the tool actuator) 53 so that the tip end of the shoulder member 12 reaches the arbitrary position (i.e., the first position) distant from the surface of the second member 62 by 0.3mm or smaller.

Accordingly, since the tip-end surface of the shoulder member 12 contacts the second member 62 while rotating, the newly-formed surface is formed earlier compared to the method of joining different types of metallic materials disclosed in Patent Document 1. Therefore, the friction stir welding apparatus 50 according to Embodiment 1 can shorten the time for joining compared to the method of joining different types of metallic materials disclosed in Patent Document 1.

Moreover, by the controller 51 controlling to bring the tip end of the shoulder member 12 to reach the first position, the plating layer (plating film) or the oxide film, which is formed in the surface of the second member 62, is removed by the tip-end part of the shoulder member 12, and the newly-formed surface is formed.

Moreover, the impurities (e.g., zinc) forming the removed plating layer (plating film) or the oxide film, flow to the directly below the pin member 11. Furthermore, a part of the impurities flows outward of the outer circumferential surface of the tip-end part of the shoulder member 12.

Therefore, when the softened part of the plastic flow caused part 60a flows, from the directly below the pin member 11, to the directly below the shoulder member 12 (the concave part generated by the press-fitting of the shoulder member 12), an amount of impurities which flow to the directly below the shoulder member 12 decreases by an amount of the impurities which flowed out.

On the other hand, in the method of joining different types of metallic materials disclosed in Patent Document 1, since the probe (pin member) is press-fitted, the softened part of the to-be-joined object 60 (the plastic flow caused part 60a) is pushed away by the probe and flowed from the directly below the probe to directly below the shoulder member, and the shoulder member moves upward with respect to the probe. At this time, the impurities (e.g., zinc) forming the plating layer (plating film) or the oxide film, which is formed in the surface of the second member 62, also flows to the directly below the shoulder member.

Note that, since the shoulder member moves upwardly, the softened part of the plastic flow caused part 60a and the impurities hardly flow outward of the outer circumferential surface of the tip-end part of the shoulder member.

Therefore, when the softened part of the plastic flow caused part 60a flows, from the directly below the shoulder member, to the directly below the probe (the concave part generated by press-fitting of the probe), an amount of impurities which flow to the directly below the probe does not decrease.

Thus, in the friction stir welding apparatus 50 according to Embodiment 1, the amount of impurities at a part in contact with the newly-formed surface (the concave part generated by the press-fitting of the shoulder member 12) can be reduced, compared to the method of joining different types of metallic materials disclosed in Patent Document 1.

Therefore, according to the friction stir welding apparatus 50 according to Embodiment 1, the joining strength can be increased compared to the method of joining different types of metallic materials disclosed in Patent Document 1.

Moreover, in the friction stir welding apparatus 50 according to Embodiment 1, when the radius of the tip-end surface 12a of the shoulder member 12 is "Rs," and the radius of the tip-end surface 11a of the pin member 11 is "Rp," the shoulder member 12 is configured to satisfy "$Rs > 2^{1/2} \times Rp$." In other words, the area of the ring-shaped tip-end surface 12a of the shoulder member 12 is larger than the area of the circular tip-end surface 11a of the pin member 11.

Accordingly, the joined area (the area of the newly-formed surface) can be increased compared to the method of joining different types of metallic materials disclosed in Patent Document 1. Thus, in the friction stir welding apparatus 50 according to Embodiment 1, the joining strength can be increased compared to the method of joining different types of metallic materials disclosed in Patent Document 1.

[Test Examples]

Next, joining tests performed to the to-be joined object 60 by using the friction stir welding apparatus 50 according to Embodiment 1, and in the method of joining different types of metallic materials disclosed in Patent Document 1, are described.

(Test Example 1)

A joining test is performed to the to-be-joined object 60 by using the friction stir welding apparatus 50 according to Embodiment 1. Note that the first position (a target destination of the shoulder member 12) is set to a position in the second member 62 at 0.05mm below the contacting surface with the first member 61 (upper surface).

(Comparative Example 1)

As Comparative Example 1, a joining test is performed to the to-be-joined object 60 in the method of joining different types of metallic materials disclosed in Patent Document 1.

In detail, the friction stir welding apparatus 50 according to Embodiment 1 is used, and a program is set to drive the pin actuator 531 to press-fit the pin member 11 into the joining part in the processing at Step 103. Here, the program is set so that the tip end of the pin member 11 is positioned in the first member 61 at 0.1mm above a contacting surface with the second member 62 (lower surface).

Moreover, the program is set so that, in the processing at Step S106, the advance/retreat actuator (the tool actuator) 53 (the pin actuator 531) is driven to separate the pin member 11 from the to-be-joined object 60.

(Joining Condition 1)

An aluminum plate (A6061) with the thickness of 1mm is used as the first member 61, and a non-plated steel plate of the 270MPa-grade with the thickness of 0.7mm is used as the second member 62. Moreover, a first rotational speed (the rotational speed of the pin member 11 and the shoulder member 12) is 1,000rpm.

Then, a tensile-shear test (JIS Z 3136) and a cross-tension test (JIS Z 3137) are performed to the to-be-joined object 60 joined by the friction stir welding apparatus of each of Comparative Example 1 and Test Example 1.

(Joining Condition 2)

An aluminum plate (A6061) with the thickness of 3mm is used as the first member 61, and a non-plated steel plate of the 270MPa-grade with the thickness of 0.7mm is used as the second member 62. Moreover, the first rotational speed (the rotational speed of the pin member 11 and the shoulder member 12) is 1,000rpm.

(Test Result 1)

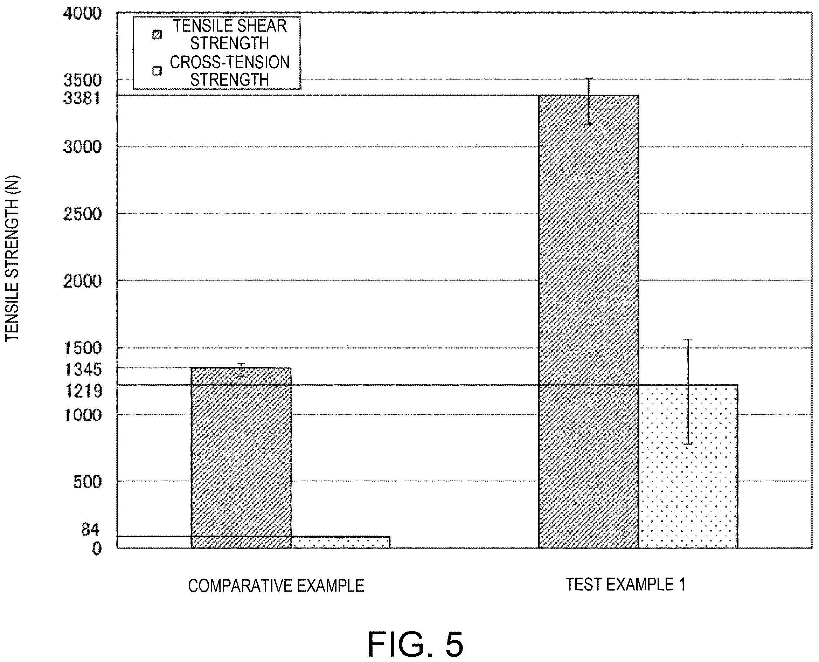

Fig. 5 is a graph illustrating a result of the tensile-shear test and the cross-tension test performed to the to-be-joined objects which are friction-stir-welded by the friction stir welding apparatuses of Comparative Example 1 and Test Example 1 under the joining condition 1.

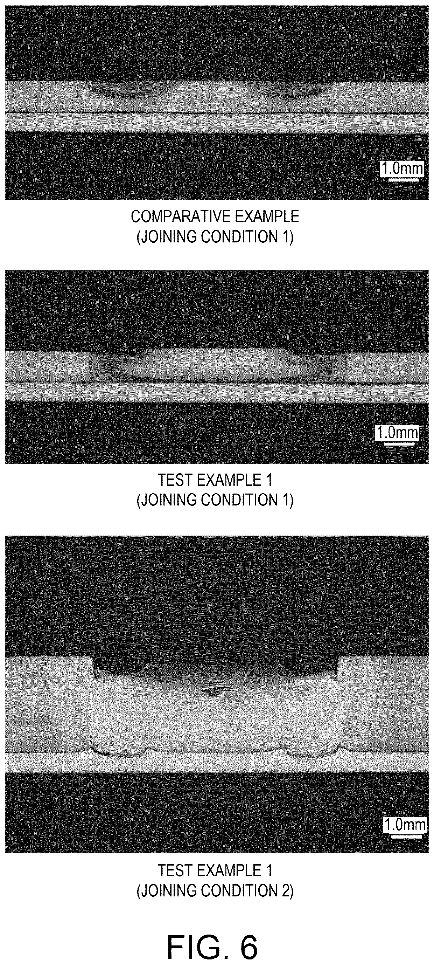

Fig. 6 shows cross-sectional images of the to-be-joined object which is friction-stir-welded by the friction stir welding apparatus of Comparative Example 1 under the joining condition 1, and the to-be joined objects which are friction-stir-welded by the friction stir welding apparatus of Test Example 1 under the joining condition 1 and the joining condition 2.

As illustrated in Fig. 5, a tensile shear strength of the to-be-joined object 60, which is friction-stir-welded by the friction stir welding apparatus of Comparative Example 1 under the joining condition 1, is 1345N, and its cross-tension strength is 84N. On the other hand, a tensile shear strength of the to-be-joined object 60, which is friction-stir-welded by the friction stir welding apparatus of Test Example 1 under the joining condition 1, is 338IN, and its cross-tension strength is 1219N.

These results show that the friction stir welding apparatus 50 according to Embodiment 1 can sufficiently increase the joining strength compared to the method of joining different types of metallic materials disclosed in Patent Document 1.

Moreover, as illustrated in Fig. 6, even when the thickness of the first member 61 of the to-be-joined object 60 is increased to 3mm, sufficient plastic flow can be caused so that the first member 61 and the second member 62 can be joined together.

(Test Example 2)

Joining tests are performed to various to-be-joined objects 60 by using the friction stir welding apparatus 50 according to Embodiment 1. Note that the first position (the target destination of the shoulder member 12) is set to the position in the second member 62 at 0.05mm below the contacting surface with the first member 61 (upper surface).

(Joining Condition 3)

An aluminum plate (A6061) with the thickness of 1mm is used as the first member 61, and a non-plated steel plate of the 270MPa-grade with the thickness of 0.7mm is used as the second member 62. Moreover, the first rotational speed (the rotational speed of the pin member 11 and the shoulder member 12) is 1,000rpm.

(Joining Condition 4)

An aluminum plate (A6061) with the thickness of 1mm is used as the first member 61, and a hot-dip galvanized steel plate (GI) of the 270MPa-grade with the thickness of 1.2mm is used as the second member 62. Moreover, the first rotational speed (the rotational speed of the pin member 11 and the shoulder member 12) is 1,000rpm.

(Joining Condition 5)

An aluminum plate (A6061) with the thickness of 1mm is used as the first member 61, and an alloyed hot-dip galvanized steel plate (GA) of the 270MPa-grade with the thickness of 1.2mm is used as the second member 62. Moreover, the first rotational speed (the rotational speed of the pin member 11 and the shoulder member 12) is 1,500rpm.

(Joining Condition 6)

An aluminum plate (A6061) with the thickness of 1mm is used as the first member 61, and a non-plated steel plate of the 980MPa-grade with the thickness of 1.2mm is used as the second member 62. Moreover, the first rotational speed (the rotational speed of the pin member 11 and the shoulder member 12) is 2,000rpm.

(Joining Condition 7)

An aluminum plate (A6061) with the thickness of 1mm is used as the first member 61, and an alloyed hot-dip galvanized steel plate (GA) of the 980MPa-grade with the thickness of 1.2mm is used as the second member 62. Moreover, the first rotational speed (the rotational speed of the pin member 11 and the shoulder member 12) is 2,000rpm.

Then, the tensile-shear test (JIS Z 3136) is performed to each of the to-be-joined objects 60 joined by the friction stir welding apparatus of Test Example 3.

(Test Result 2)

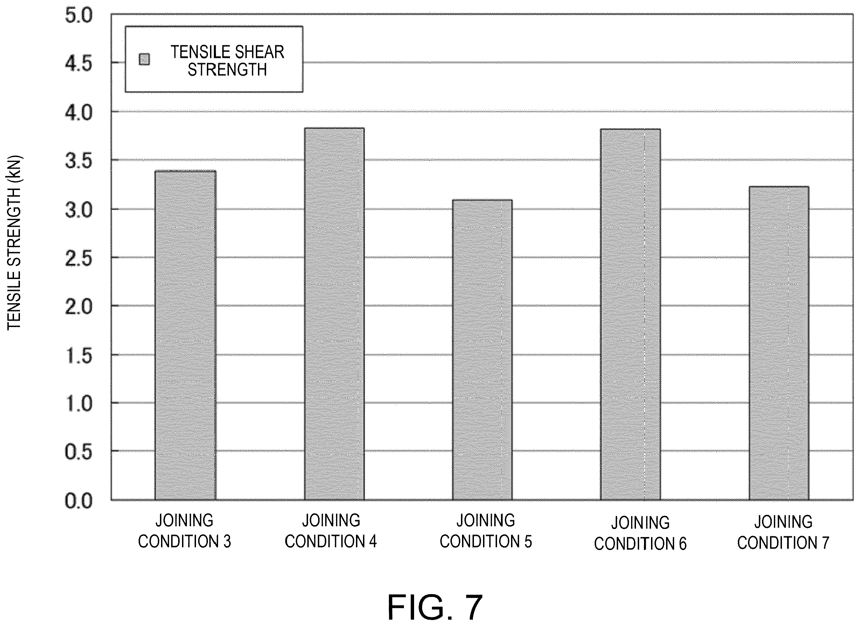

Fig. 7 is a graph illustrating a result of the tensile-shear test performed to the to-be-joined objects which are friction-stir-welded by the friction stir welding apparatus of Test Example 2 under the joining conditions 3 to 7.

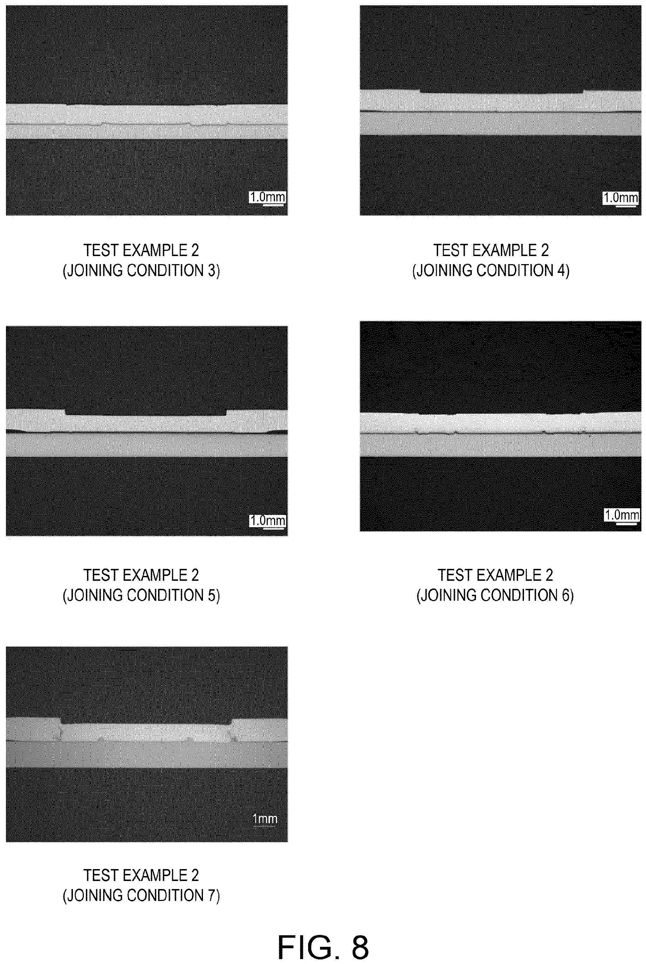

Fig. 8 shows cross-sectional images of the to-be-joined objects which are friction-stir-welded by the friction stir welding apparatus of Test Example 2 under the joining conditions 3 to 7.

As illustrated in Figs. 7 and 8, tensile shear strengths of the to-be-joined objects 60 which are friction-stir-welded by the friction stir welding apparatus of Test Example 2 under the joining conditions 3 to 6, are at or above 3.0kN, which indicates that the joining strength can sufficiently be increased using various steel plates.

Note that the present inventors have confirmed, as a result of a joining test performed to the to-be-joined object 60 (data not shown), that the joining of the to-be-joined object 60 is possible using an aluminum plate (A6061) with the thickness of 1mm as the first member 61, and an aluminum-silicon coating hot-stamped steel plate as the second member 62, and setting the first rotational speed at 2,000rpm.

(Test Example 3)

A joining test is performed to the to-be-joined object 60 by using the friction stir welding apparatus 50 according to Embodiment 1. Note that the first position (the target destination of the shoulder member 12) is set to a position in the second member 62 at 0.2mm below the contacting surface with the first member 61 (upper surface).

(Joining Condition 8)

Al-Si-Mg alloy (AC4C) with the thickness of 2.5mm is used as the first member 61, and a non-plated steel plate of the 270MPa-grade is used as the second member 62. Moreover, the first rotational speed (the rotational speed of the pin member 11 and the shoulder member 12) is 1,500rpm.

Then, the tensile-shear test (JIS Z 3136) and the cross-tension test (JIS Z 3137) are performed to the to-be-joined object 60 joined by the friction stir welding apparatus of Test Example 3.

(Test Result 3)

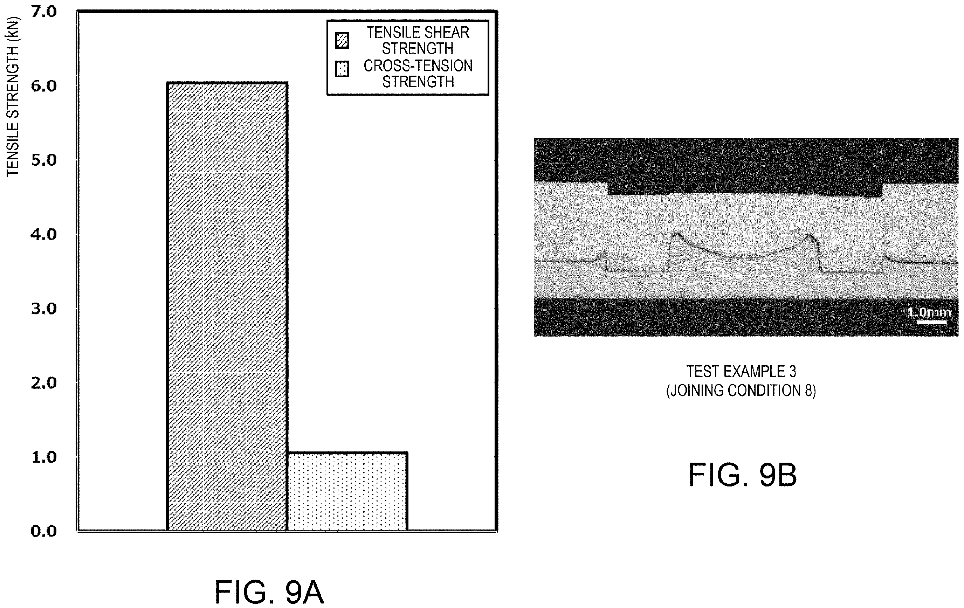

Fig. 9A is a graph illustrating the result of the tensile-shear test and the cross-tension test performed to the to-be-joined object which is friction-stir-welded by the friction stir welding apparatus of Test Example 3 under the joining condition 8. Fig. 9B is a cross-sectional image of the to-be-joined object which is friction-stir-welded by the friction stir welding apparatus of Test Example 3 under the joining condition 8.

As illustrated in Figs. 9A and 9B, it is indicated that even when the Al-Si-Mg alloy (AC4C) is used as the first member 61, the joining of the to-be-joined object 60 is possible with sufficient joining strength.

(Test Example 4)

A joining test is performed to the to-be-joined object 60 by using the friction stir welding apparatus 50 according to Embodiment 1. Note that the first position (the target destination of the shoulder member 12) is set to a position in the second member 62 at 0.1mm below the contacting surface with the first member 61 (upper surface). Moreover, sealant (adhesive) is applied to the contacting surface between the first member 61 and the second member 62.

(Joining Condition 9)

An aluminum plate (A6061) with the thickness of 1mm is used as the first member 61, and a non-plated steel plate of the 270MPa-grade with the thickness of 0.7mm is used as the second member 62. Moreover, the first rotational speed (the rotational speed of the pin member 11 and the shoulder member 12) is 1,000rpm.

(Test Result 4)

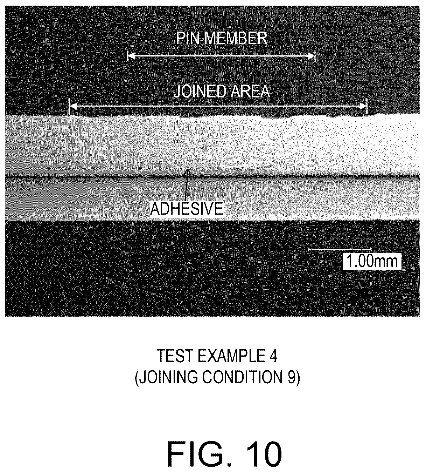

Fig. 10 is a cross-sectional image of the to-be-joined object which is friction-stir-welded by the friction stir welding apparatus of Test Example 4 under the joining condition 9. A "joined range" in Fig. 10 indicates a part where the upper surface of the to-be-joined object 60 contacts the pin member 11 and the shoulder member 12.

As illustrated in Fig. 10, it is indicated that a lot of sealant (adhesive) applied to the contacting surface between the first member 61 and the second member 62 exists at the directly below the pin member 11.

Therefore, it is suggested that even when the softened part of the plastic flow caused part 60a flows, from the directly below the pin member 11, to the directly below the shoulder member 12 (the concave part generated by the press-fitting of the shoulder member 12) in the processing at Step S106, the sealant does not flow to the directly below the shoulder member 12 (the concave part generated by the press-fitting of the shoulder member 12), but remains (stays) at the directly below the pin member 11.

(Test Example 5)

A joining test is performed to the to-be-joined object 60 by using the friction stir welding apparatus 50 according to Embodiment 1. Note that the first position (the target destination of the shoulder member 12) is set to a position in the second member 62 at 0.1mm below the contacting surface with the first member 61 (upper surface). Moreover, when the tip end of the shoulder member 12 reaches the first position at Step S105, the pin member 11 and the shoulder member 12 are lifted upwardly, and the joining test is suspended.

(Comparative Example 2)

As Comparative Example 2, a joining test is performed to the to-be-joined object 60 in the method of joining different types of metallic materials disclosed in Patent Document 1.

In detail, the friction stir welding apparatus 50 according to Embodiment 1 is used, and a program is set to drive the pin actuator 531 to press-fit the pin member 11 into the joining part in the processing at Step 103. Here, the program is set so that the tip end of the pin member 11 is positioned in the second member 62 at 0.1mm below the contacting surface with the first member 61 (upper surface).

Moreover, similarly to Test Example 5, when the tip end of the pin member 11 reaches the first position at Step S105, the pin member 11 and the shoulder member 12 are lifted upwardly, and the joining test is suspended.

(Joining Condition 10)

An aluminum plate (A6061) with the thickness of 1mm is used as the first member 61, and a hot-dip galvanized steel plate (GI) of the 270MPa-grade with the thickness of 1.2mm is used as the second member 62. Moreover, the first rotational speed (the rotational speed of the pin member 11 and the shoulder member 12) is 1,000rpm.

(Test Result 5)

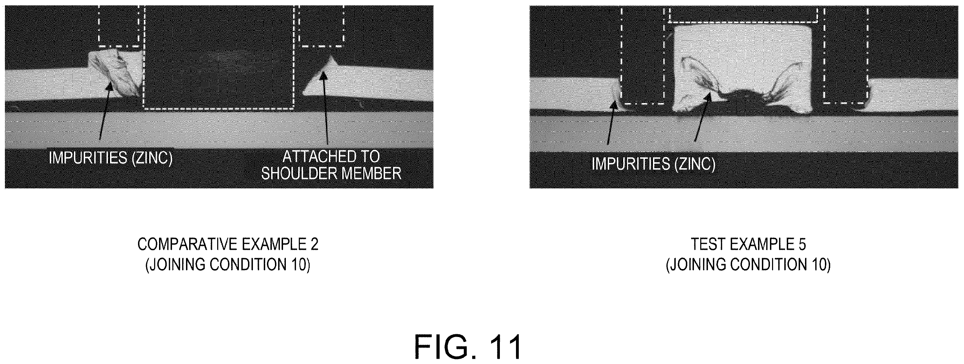

Fig. 11 shows cross-sectional images of the to-be-joined objects which are friction-stir-welded by the friction stir welding apparatuses of Comparative Example 2 and Test Example 5 under the joining condition 10. Note that in Fig. 11 the pin member is schematically indicated by dashed lines, and the shoulder member is schematically indicated by one-dot chain lines.

As illustrated in Fig. 11, when the to-be-joined object 60 is friction-stir-welded by using the friction stir welding apparatus of Comparative Example 2, a softened part of the plastic flow caused part 60a is pushed away by the pin member 11 to flow from the directly below the pin member 11 to the directly below the shoulder member 12. Here, it is indicated that the impurities (e.g., zinc) forming the plating layer (plating film) in the surface of the second member 62 also flow to the directly below the shoulder member 12.

Note that, in Fig. 11, it can be assumed that a right part of the first member 61 at the directly below the shoulder member 12 is broken by being attached (adhered) to the shoulder member 12.

On the other hand, when the to-be-joined object 60 is friction-stir-welded by using the friction stir welding apparatus of Test Example 5, the softened part of the plastic flow caused part 60a is pushed away by the shoulder member 12 to flow from the directly below the shoulder member 12 to the directly below the pin member 11.

Here, it is indicated that a large part of the impurities (e.g., zinc) forming the plating layer (plating film) in the surface of the second member 62 flows to the directly below the pin member 11. Moreover, it is indicated that a part of the impurities flows outward of the outer circumferential surface of the tip-end part of the shoulder member 12.

Therefore, it is suggested that, when the softened part of the plastic flow caused part 60a flows, from the directly below the pin member 11, to the directly below the shoulder member 12 (the concave part generated by the press-fitting of the shoulder member 12), an amount of impurities which flow to the directly below the shoulder member 12 decreases by the amount of the impurities which flowed out.

Moreover, taking the result of Test Example 4 (Test Result 4) into account, it is considered that the impurities which flowed to the directly below the pin member 11 remain (stay) at the directly below the pin member 11 when the softened part of the plastic flow caused part 60a flows from the directly below the pin member 11 to the directly below the shoulder member 12.

It is apparent for a person skilled in the art from the above description that many improvements and other embodiments of the present disclosure are possible. Therefore, the above description is to be interpreted only as illustration, and it is provided in order to teach a person skilled in the art the best mode for implementing the present disclosure. The details of the structures and/or the functions may be substantially changed, without departing from the spirit of the present disclosure. Moreover, various inventions may be created by suitably combining the plurality of components disclosed in the above embodiment.

INDUSTRIAL APPLICABILITY

The friction stir welding apparatus and the method of operating the apparatus of the present disclosure are useful since they can shorten a time for joining compared to a conventional method of joining different types of metallic materials.

DESCRIPTION OF REFERENCE CHARACTERS

| | |
|---|---|
| 11 | Pin Member |
| 11a | Tip-end Surface |
| 12 | Shoulder Member |
| 12a | Tip-end Surface |
| 13 | Clamp Member |
| 13a | Tip-end Surface |
| 31 | Storage Device |
| 32 | Input Device |
| 33 | Position Detecting Device |
| 41 | Clamp Actuator |
| 50 | Friction Stir Welding Apparatus |
| 51 | Controller |
| 52 | Tool Brace |
| 53 | Advance/retreat Actuator (Tool actuator) |
| 55 | Backing Support Part |
| 56 | Backing Member |

| | |
|---|---|
| 56a | Support Surface |
| 57 | Rotary Actuator |
| 60a | Plastic Flow Caused Part |
| 60 | To-be-joined Object |
| 60c | Surface |
| 61 | First Member |
| 62 | Second Member |
| 62a | Contacting Surface |
| 521 | Rotary Tool Brace |
| 522 | Clamp Brace |
| 531 | Pin Actuator |
| 532 | Shoulder Actuator |
| t | Thickness |
| Xr | Axis |

In view of the forgoing, the present invention also relates to aspects, embodiments and features described in the following itemized list:

Item 1. A friction stir welding apparatus configured to join a to-be-joined object having a first member and a second member by softening the to-be-joined object by frictional heat, comprising:

a pin member formed in a solid cylindrical shape;
a shoulder member formed in a hollow cylindrical shape and into which the pin member is inserted;
a rotary actuator configured to rotate the pin member and the shoulder member about an axis aligned with an axial center of the pin member;
an advance/retreat actuator configured to advance and retreat each of the pin member and the shoulder member along the axis; and
a controller,
wherein the first member is disposed to be opposed to the pin member and the shoulder member, and is made of material with a lower melting point than the second member, and
wherein the controller is adapted to:

(A) operate the rotary actuator and the advance/retreat actuator so that the pin member and the shoulder member press a joining part of the to-be-joined object while rotating the pin member and the shoulder member;
(B) operate the advance/retreat actuator and the rotary actuator so that a tip end of the rotating shoulder member reaches a given first position in the second member set in advance, and the rotating pin member retreats from the joining part of the to-be-joined object; and
(C) then operate the rotary actuator and the advance/retreat actuator so that the rotating shoulder member is pulled out from the joining part of the to-be-joined object, and the rotating pin member is advanced toward the joining part of the to-be-joined object.

Item 2. The friction stir welding apparatus of item 1, wherein the first position is a position in the second member, 0.3mm or smaller distant from a contacting surface with the first member.

Item 3. The friction stir welding apparatus of item 1 or 2, wherein the shoulder member is configured to satisfy the following formula when assumed that a radius of a tip-end surface of the shoulder member is Rs, and a radius of a tip-end surface of the pin member is Rp:

$$Rs > 2^{1/2} \times Rp.$$

Item 4. The friction stir welding apparatus of any one of items 1 to 3, wherein the to-be-joined object is applied with sealant at a contacting part between the first member and the second member overlapped with each other.

Item 5. A method of operating a friction stir welding apparatus configured to join a to-be-joined object having a first member and a second member by softening the to-be-joined object by frictional heat,

wherein the friction stir welding apparatus includes:

a pin member formed in a solid cylindrical shape;
a shoulder member formed in a hollow cylindrical shape and into which the pin member is inserted;
a rotary actuator configured to rotate the pin member and the shoulder member about an axis aligned with an axial center of the pin member;
an advance/retreat actuator configured to advance and retreat each of the pin member and the shoulder member along the axis; and
a controller,

wherein the first member is disposed to be opposed to the pin member and the shoulder member, and is made of material with a lower melting point than the second member, and
wherein the controller is adapted to:

(A) operate the rotary actuator and the advance/retreat actuator so that the pin member and the shoulder member press a joining part of the to-be-joined object while rotating the pin member and the shoulder member;

(B) operate the advance/retreat actuator and the rotary actuator so that a tip end of the rotating shoulder member reaches a given first position in the second member set in advance, and the rotating pin member retreats from the joining part of the to-be-joined object; and

(C) then operate the rotary actuator and the advance/retreat actuator so that the rotating shoulder member is pulled out from the joining part of the to-be-joined object, and the rotating pin member is advanced toward the joining part of the to-be-joined object.

Item 6. The method of item 5, wherein the first position is a position in the second member, 0.3mm or smaller distant from a contacting surface with the first member.

Item 7. The method of item 5 or 6, wherein the shoulder member is configured to satisfy the following formula when assumed that a radius of a tip-end surface of the shoulder member is Rs, and a radius of a tip-end surface of the pin member is Rp:

$$Rs > 2^{1/2} \times Rp.$$

Item 8. The method of any one of items 5 to 7, wherein the to-be-joined object is applied with sealant at a contacting part between the first member and the second member overlapped with each other.

## Claims

**1.** A friction stir welding apparatus (50) configured to join a to-be-joined object (60) having a first member (61) and a second member (62) by softening the to-be-joined object (60) by frictional heat, comprising:

a pin member (11) formed in a solid cylindrical shape;

a shoulder member (12) formed in a hollow cylindrical shape and into which the pin member (11) is inserted;

a rotary actuator (57) configured to rotate the pin member (11) and the shoulder member (12) about an axis (Xr) aligned with an axial center of the pin member (11);

a tool actuator (53) configured to advance and retreat each of the pin member (11) and the shoulder member (12) along the axis (Xr); and

a controller (51),

wherein the first member (61) is disposed to be opposed to the pin member (11) and the shoulder member (12), and is made of material with a lower melting point than the second member (62),

wherein the controller (51) is adapted to:

(A) operate the rotary actuator (57) and the tool actuator (53) so that the pin member (11) and the shoulder member (12) press a joining part of the to-be-joined object (60) while rotating the pin member (11) and the shoulder member (12);

(B) operate the tool actuator (53) and the rotary actuator (57) so that a tip end of the rotating shoulder member (12) reaches a given first position in the second member (62) set in advance, and the rotating pin member (11) retreats from the joining part of the to-be-joined object (60); and

(C) then operate the rotary actuator (57) and the tool actuator (53) so that the rotating shoulder member (12) is pulled out from the joining part of the to-be-joined object (60), and the rotating pin member (11) is advanced toward the joining part of the to-be-joined object (60), and

wherein the shoulder member (12) is configured to satisfy the following formula when assumed that a radius of a tip-end surface of the shoulder member (12) is Rs, and a radius of a tip-end surface of the pin member (11) is Rp:

$$Rs > 2^{1/2} \times Rp.$$

**2.** A method of operating a friction stir welding apparatus configured to join a to-be-joined object (60) having a first member (61) and a second member (62) by softening the to-be-joined object (60) by frictional heat,

wherein the friction stir welding apparatus includes:

a pin member (11) formed in a solid cylindrical shape;

a shoulder member (12) formed in a hollow cylindrical shape and into which the pin member (11) is inserted;

a rotary actuator (57) configured to rotate the pin member (11) and the shoulder member (12) about an axis (Xr) aligned with an axial center of the pin member (11);

a tool actuator (53) configured to advance and retreat each of the pin member (11) and the shoulder member (12) along the axis (Xr); and

a controller (51),

wherein the first member (61) is disposed to be opposed to the pin member (11) and the shoulder member (12), and is made of material with a lower melting point than the second member (62),
wherein the controller (51) is adapted to:

(A) operate the rotary actuator (57) and the tool actuator (53) so that the pin member (11) and the shoulder member (12) press a joining part of the to-be-joined object (60) while rotating the pin member (11) and the shoulder member (12);
(B) operate the tool actuator (53) and the rotary actuator (57) so that a tip end of the rotating shoulder member (12) reaches a given first position in the second member (62) set in advance, and the rotating pin member (11) retreats from the joining part of the to-be-joined object (60); and
(C) then operate the rotary actuator (57) and the tool actuator (53) so that the rotating shoulder member (12) is pulled out from the joining part of the to-be-joined object (60), and the rotating pin member (11) is advanced toward the joining part of the to-be-joined object (60), and

wherein the shoulder member (12) is configured to satisfy the following formula when assumed that a radius of a tip-end surface of the shoulder member (12) is Rs, and a radius of a tip-end surface of the pin member (11) is Rp:

$$Rs > 2^{1/2} \times Rp.$$

50
UP
53
531
532
522
52
521
41
13
55
57
P1
12
P2
11
60
Xr
P3
Rp
Rs
62a
61
t
62
56
56a
12a
11a
13a
DOWN

FIG. 1

50
INPUT DEVICE
32
CONTROLLER
51
STORAGE DEVICE
31
TOOL ACTUATOR
PIN ACTUATOR
SHOULDER ACTUATOR
ROTARY ACTUATOR
53
531
532
57


FIG. 2

START
DRIVE ROTARY ACTUATOR
S101
DRIVE TOOL ACTUATOR
S102
DRIVE TOOL ACTUATOR SO THAT PIN MEMBER IS DRAWN INTO SHOULDER MEMBER
S103
ACQUIRE POSITIONAL INFORMATION FROM POSITION DETECTING DEVICE
S104
TIP-END PART OF SHOULDER MEMBER REACHES 1ST POSITION?
S105
NO
YES
DRIVE TOOL ACTUATOR SO THAT PIN MEMBER PROTRUDES WITH RESPECT TO SHOULDER MEMBER
S106
DRIVE TOOL ACTUATOR SO THAT TIP-END SURFACES OF PIN MEMBER AND SHOULDER MEMBER ARE SEPARATED FROM TO-BE-JOINED OBJECT
S107
STOP ROTARY ACTUATOR
S108
END

FIG. 3

PROCESS (1)
PROCESS (2)
PROCESS (3)
P3
P2 P1 P2
P1
P2
F
r
41
54
12
11
60
60c
61
62
56
60a
61a

FIG. 4A

PROCESS (4)
PROCESS (5)
P2 P1 P2
P3
P3
F
r
41
54
12
11
60
60a
60c
61
62
56

FIG. 4B

TENSILE SHEAR STRENGTH
CROSS-TENSION STRENGTH
4000
3500
3381
3000
2500
2000
1500
1345
1219
1000
500
84
0
TENSILE STRENGTH (N)
COMPARATIVE EXAMPLE
TEST EXAMPLE 1

FIG. 5

1.0mm

COMPARATIVE EXAMPLE
(JOINING CONDITION 1)

1.0mm

TEST EXAMPLE 1
(JOINING CONDITION 1)

1.0mm

TEST EXAMPLE 1
(JOINING CONDITION 2)

FIG. 6

TENSILE STRENGTH (KN)
5.0
4.5
4.0
3.5
3.0
2.5
2.0
1.5
1.0
0.5
0.0
TENSILE SHEAR STRENGTH
JOINING CONDITION 3
JOINING CONDITION 4
JOINING CONDITION 5
JOINING CONDITION 6
JOINING CONDITION 7

FIG. 7

1.0mm

TEST EXAMPLE 2
(JOINING CONDITION 3)

1.0mm

TEST EXAMPLE 2
(JOINING CONDITION 4)

1.0mm

TEST EXAMPLE 2
(JOINING CONDITION 5)

1.0mm

TEST EXAMPLE 2
(JOINING CONDITION 6)

1mm

TEST EXAMPLE 2
(JOINING CONDITION 7)

FIG. 8

TENSILE STRENGTH (kN)

7.0
6.0
5.0
4.0
3.0
2.0
1.0
0.0

TENSILE SHEAR STRENGTH
CROSS-TENSION STRENGTH

FIG. 9A

1.0mm

TEST EXAMPLE 3
(JOINING CONDITION 8)

FIG. 9B

PIN MEMBER
JOINED AREA
ADHESIVE
1.00mm

TEST EXAMPLE 4
(JOINING CONDITION 9)

FIG. 10

IMPURITIES (ZINC)
ATTACHED TO
SHOULDER MEMBER

COMPARATIVE EXAMPLE 2
(JOINING CONDITION 10)

IMPURITIES (ZINC)

TEST EXAMPLE 5
(JOINING CONDITION 10)

FIG. 11

## REFERENCES CITED IN THE DESCRIPTION

*This list of references cited by the applicant is for the reader’s convenience only. It does not form part of the European patent document. Even though great care has been taken in compiling the references, errors or omissions cannot be excluded and the EPO disclaims all liability in this regard.*

### Patent documents cited in the description


- JP 4937386 B
- JP 2012196682 A